# EUROPEAN PATENT APPLICATION

(11) **EP 4 006 661 A1**
(43) Date of publication of application: **01.06.2022**
(21) Application number: 20209832.3
(22) Date of filing: 25.11.2020
(51) Int. Cl.: G05B 19/042

(54) **HYDRAULIC SYSTEM**

(71) Applicant: Grundfos Holding A/S, 8850 Bjerringbro (DK)
(72) Inventor: DYRBYE, Karsten, 8850 Bjerringbro (DK); KRAGH, Henrik, 8850 Bjerringbro (DK); JENSEN, Kim Hulegaard, 8850 Bjerringbro (DK)
(74) Representative: Patentanwälte Vollmann Hemmer Lindfeld Partnerschaft mbB

(57) **Abstract**

The invention refers to a hydraulic system comprising at least two hydraulic devices (24, 26; 34) and at least one control device (10; 40), wherein each of the hydraulic devices (24, 26; 34) and the control device (10; 40) comprises storage means (32; 38), and the hydraulic devices (24, 26; 34) and the at least one control device (10; 40) are interconnected for data communication, wherein said storage means (32; 38) are configured to store at least one system identifier characterizing the hydraulic system and that said at least one control device (10; 40) is configured to read the system identifiers from the storage means (32; 38), to check whether the read system identifiers show a corresponding characterization of the hydraulic system, and to set up a control according to a majority of corresponding system identifiers, and a method to set up a control device of a hydraulic system.

## Description

The invention refers to a hydraulic system and to a method to set up a control of a hydraulic system. Hydraulic systems like pump systems, for example booster pump systems in the water supply, or heating systems often consist of several components like valves, sensors, pumps and control devices. To set up the entire control of the system these components have to interact with each other and often a set up of the control and/or the components is necessary, depending on the characteristics of the hydraulic system.

In view of this it is the object of the invention to provide a hydraulic system and a method to set up a control of a hydraulic system which allow a simplified set up and to easily exchange hydraulic devices or control devices in the hydraulic system.

This object is achieved by a hydraulic system having the features defined in claim 1 and by a method having the features defined in claim 13. Preferred embodiments are disclosed in the dependent sub claims, the following description and the accompanying drawings.

The hydraulic system according to the invention comprises at least two hydraulic devices and at least one control device. The control device may be configured for the control of the entire hydraulic system, for controlling a part of the hydraulic system and/or one or more devices inside the hydraulic system. Each of the hydraulic devices and the control device comprises storage means, which may be configured such that data are stored once in the storage means or such that the storage means may be rewriteable so that it is possible to change the data stored in the storage means. The hydraulic devices and the at least one control device are interconnected for data communication. This data communication in particular may allow to transmit the data stored in the storage means from one device to another device.

Said storage means are configured to store at least one system identifier characterizing the hydraulic system. The system identifier in particular can be an identifier characterizing the overall or entire hydraulic system, i. e. the identifier is not just characterizing the component or device having the storage means containing the system identifier. Since the system identifier is stored in the storage means of the different devices it is possible to assign the devices to each other and to the entire system by use of the identifiers. The at least one control device is configured to read the system identifiers from the storage means, i. e. the storage means of the different devices. Furthermore, the control device is configured such that it checks whether the system identifiers received or read from the storage means of the different devices show a corresponding characterization of the hydraulic system, i. e. whether the received system identifiers characterize the same hydraulic system or refer to the same characteristic of the hydraulic system. This means, by checking or verifying the different system identifiers it is possible for the control device to verify whether all the different devices containing the system identifiers belong to the same hydraulic system or are configured for use in the same hydraulic system.

Furthermore, the control device is configured such that it sets up a control, for example chooses a control scheme or control program or adjusts a control scheme or program, according to a majority of corresponding system identifiers. This means in case that there are system identifiers received from the different devices which do not show the same or corresponding characterization it is considered by the control device whether there is a majority of system identifiers having or referring to a corresponding or identical characterization. If there is such a majority the control is set up according or on basis of the system identifiers which are in majority. The system identifiers which show a or refer to a different characterization in this case are disregarded. According to a possible embodiment, the control device or the respective hydraulic devices may initiate to overwrite the system identifiers which do not correspond to the majority of system identifiers, i. e. to replace those system identifiers by a system identifier corresponding to the majority. Furthermore, it is possible to adjust the devices containing the not corresponding system identifiers to the characteristics of the hydraulic system specified by the majority of system identifiers.

In a possible embodiment of the invention the set up of the controller according to the majority of system identifiers being identical or corresponding requires a user confirmation. For this the control device may be configured such that it outputs an information to the user that not all identifiers read are identical. Furthermore, the control device may be configured to output a proposed set up for the control which requires a confirmation by a user, for example by input of a confirmation signal by the user, for example by pressing a respective key on the control or suitable input device. Furthermore, it may be possible that the control device is configured to show alternative suitable set ups of the control which would correspond to the read system identifiers and the user may choose one of the possible set ups or finally confirm a set up by a manual input. By this a higher security for the correct set up of the hydraulic system is given.

In such a hydraulic system according to the invention it is easy to replace hydraulic devices or control devices, since the system allows to automatically set up those replaced devices. Furthermore, during installation it is no problem if the hydraulic devices or control devices of different hydraulic systems installed at the same time are mixed up, for example in case that the control devices of different hydraulic systems are mixed up such that the control devices do not have the required configuration for the specific hydraulic system. Furthermore, it is possible to use generic control devices or hydraulic devices which automatically adapt to the majority of system identifiers of the hydraulic devices already installed in the respective hydraulic system.

Said system identifier, i. e. the system identifier stored in the storage means of the control device and/or the hydraulic devices may for example characterize or specify hydraulic properties, type, dimension, assembly and/or application or intended use of the hydraulic system. The system identifier may directly contain the respective information or may just be an identifier representing a certain type or use or set up of the hydraulic system. Preferably the system identifiers are configured such that the control device is able to set up the control on basis of such a system identifier, i. e. for example to choose between different control schemes or programs available in the control device or to adjust certain parts of a control scheme or program, for example parameters according to the characteristics of the hydraulic system which are identified by the system identifier. For this it may also be possible to have a database containing further information about the hydraulic system characterized by the system identifier, which database may be stored in the control device or may be available for the control device via a data connection like a data network, for example the internet.

According to a further possible embodiment of the invention the control devices are configured to check whether the read system identifiers are identical and to set up a control according to a majority of identical system identifiers. By using such system identifiers which are identical in case they refer to the same characteristic of the hydraulic system, the check or verification process is simplified since the control device just has to verify whether the system identifiers are identical. Nevertheless, according to a different embodiment, corresponding system identifiers may, for example, just show identical parts or may in another suitable way refer to the same characterization of the hydraulic system.

Furthermore, preferably the control device is configured such that it sets up the control or configures the control according to such corresponding or identical system identifiers stored in the storage means of more than the half of the devices. This means in this case the majority is defined by more than 50 percent of the overall hydraulic devices and control devices available in the hydraulic system.

The hydraulic devices for example may be sensors and/or hydraulic actuators, for example pumps and/or valves. In particular the hydraulic devices may be all kinds of components or devices containing electronics and/or electric elements, in particular electric actuators or electric or electronic sensing means. Furthermore, those devices or components in the hydraulic system may contain electronics for control of the respective devices and/or for communication with other devices, in particular a control device in the hydraulic system. Those components often comprise storage means, anyway, so it is easily possible to additionally store a system identifier in such devices.

The at least one control device provided in the hydraulic system may be a control device of one of the hydraulic devices only, or a control device of more than a single hydraulic device. Preferably, the control device is integrated into one of the hydraulic devices. For example the control device may be integrated in a pump unit or a valve unit.

According to a further possible embodiment said at least one control device may be a central control device configured for controlling the hydraulic system, i. e. at least a portion of the hydraulic system or preferably the entire hydraulic system. This control device may be a separate device or a control device being integrated into another device of the hydraulic system, for example one of the hydraulic devices like a pump unit or valve unit. According to a preferred embodiment the control device may be removable from the hydraulic system. Also in case that the control device is integrated into one of the hydraulic devices, for example a pump unit, it may be removable. For example, the control device may be arranged in a housing attached to a pump unit and may be disconnected from the pump unit for example during the hydraulic installation or to replace the control device in case of a fault.

According to a further possible embodiment said hydraulic devices each comprise a data connection to a central control device, wherein this central control device may be a separate control device or be integrated into one of the hydraulic devices as described before. The data connection may be a direct data connection or an indirect data connection using a communication network like for example a bus-system or the internet. Furthermore, it may be possible that the hydraulic devices are connected to the control devices via a data communication using relay devices, wherein the relay devices may for example be provided by other hydraulic devices in the system. By such a set up the range of the communication may be extended.

According to a possible embodiment at least two of the hydraulic devices are directly interconnected for data communication. This may be used for a data exchange between these two hydraulic devices or may be used to transfer the data to further devices using one of the hydraulic devices as a relay device.

The control device according to a further embodiment may be configured such that it sets up the control of the hydraulic system and/or the control device of at least one of the hydraulic devices. This means the control may change or adjust the control program or control scheme for the entire hydraulic device or a portion of the hydraulic device inside the control device itself. Furthermore, the control device additionally or alternatively may be configured such that it may adjust or set up the control of one ore more of the hydraulic devices. For example in a sensor device the sensing range or the data output by the sensor device may be changed or adjusted. For example in a combined sensor able to detect pressure and temperature it may be possible to set up which data are output from the sensor device, either temperature or pressure.

According to a further possible embodiment the control device may be configured such that it is able to write a system identifier into the storage means of those devices not showing a system identifier corresponding or being identical to the majority of the system identifiers. This means that the control device is able to bring the hydraulic devices or control devices not corresponding to the majority of the system identifiers into conformity with this majority. In particular generic or unconfigured devices added to the system may be set up or configured to the majority by writing the respective system identifiers into their storage means.

The described data communication or interconnection for data communication between the several devices may for example be a wired and/or wireless data connection using any suitable communication standard.

Beside the hydraulic system described above a method to set up a control of a hydraulic system, in particular a hydraulic system according to the preceding description is subject of the present invention. It is to be understood that preferred features described above are regarded as preferred embodiments of the method described in the following, too. Furthermore, preferred features described in the following with reference to the method should be regarded as preferred embodiments of the system as described above.

The method according to the invention is a method providing a set up or configuration of a control of a hydraulic system, wherein the hydraulic system comprises at least two hydraulic devices and at least one control device. Each of the hydraulic devices and the control device comprises storage means configured to store at least one system identifier characterizing the entire hydraulic system. This may be a system identifier as explained above. According to the method the system identifiers stored in the storage means of the hydraulic devices and the at least one control device in said hydraulic system are read or transmitted from the storage means to a control device carrying out a verification process or verification routine. In a further step it is checked or verified whether the read or received system identifiers show a corresponding characterization of the hydraulic system, in particular it is verified whether all the system identifiers stored in the different devices of the hydraulic system are identical. In case that the received or read system identifiers are not identical the control is set up or adjusted to the majority of corresponding or identical system identifiers. This means the control, in particular the control of the entire hydraulic system is carried out according to the majority of system identifiers found in the system. The system identifiers not corresponding to the majority may be disregarded. Possibly the hydraulic devices or control devices which are in the minority in regard of the system identifiers stored in their storage means may be configured or reconfigured according to the system identifier being in majority.
According to a further possible embodiment the method may require a user confirmation for the set up of the control before implementing or starting the set up. For example in case that not all received system identifiers are identical or correspond to one another it may be required that a user confirms which system identifier is in majority or confirms a proposed control set up. A control device may propose a possible set up according to the majority of identical system identifiers to the user so that the user has just to confirm this proposal.

This may be done by any suitable input device. Such an input device may be attached directly to the control device or for example implemented in a remote control communicating with the control device. Such remote control may be a common smartphone with a respective software application. It would also be possible to provide the verification process by a respective software application, in particular a software application in the remote control like a smartphone. Thus, such software application may be regarded as a control device as described above or part of such control device providing parts of the functionality of the control device, in particular reading the system identifiers and/or carrying out the verification process and/or the set up of the control device.

Preferably, the system identifiers showing a corresponding characterization of the hydraulic system are identical. This simplifies the verification process since it avoids a further analyzation of the system identifiers.

Preferably, the control which is set up or configured according to the majority of corresponding or identical system identifiers is a control of the hydraulic system, in particular the entire hydraulic system, and/or of at least one hydraulic device in the hydraulic system. The set up of the control may adjust or configure the control scheme or control program. For example a relating control program or control scheme may be chosen from several control schemes stored in the respective device. In addition or as an alternative it may be possible to adjust parameters in a control scheme or control program to set up the control according to a system identifier. The control may for example be a control of one or more hydraulic devices. For example a sensor device may be configured to be in conformity or adapted for the use inside a certain hydraulic system.

In the following the invention is described by way of example with reference to the accompanying figures. In this:

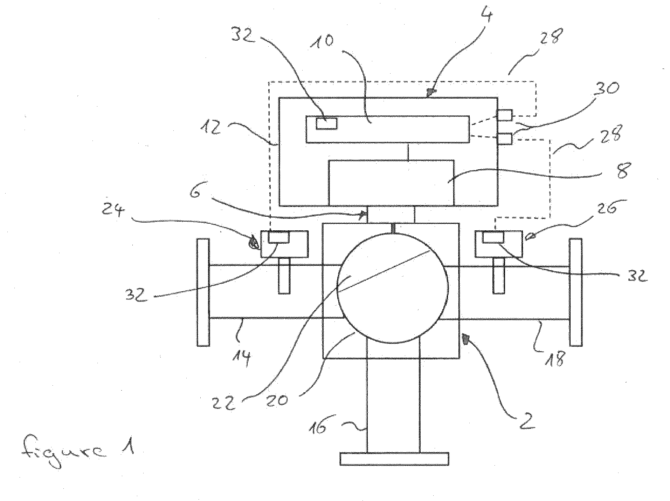

- Fig. 1: shows a schematical drawing of a hydraulic system in form of a mixing device for a heating system.
- Fig. 2: shows a schematical drawing of a hydraulic system according to a further embodiment of the invention.

In this example the hydraulic system is a hydraulic device consisting of two main components, namely a hydraulic unit 2 and a control device in form of a control and drive unit 4. The control and drive unit 4 is detachably coupled to the hydraulic unit 2 via a coupling 6 comprising engaging elements on the hydraulic unit 2 and the control and drive unit 4.

The control and drive unit 4 comprises a drive means 8, for example a drive motor, and a control device 10 controlling the drive means 8. In this example the drive means 8 and the control device 10 are arranged in a common housing 12.

The hydraulic unit 2 in this example is a mixing valve having a first inlet port 14 and a second inlet port 16 and an outlet port 18. The two inlet ports 14, 16 and the outlet port 18 are provided to be connected with further components of the hydraulic system, in particular of a heating system. The inlet ports 14, 16 and the outlet port 18 are connected to a valve or actuator space 20 inside which a hydraulic actuator 22 in form of a valve element is arranged. In this example the valve element (hydraulic actuator 22) is ball shaped and movable to vary the opening degree of the first inlet port 14 and the second inlet port 16 towards the outlet port 18. Thus, by changing the position of the hydraulic actuator 22 the ratio of the volume flows through the inlet port 14 and the inlet port 16 can be adjusted, i.e. a mixing ratio of the fluid flow to the outlet port 18 can be varied. The hydraulic actuator 22 is connected to the coupling 16 and can be moved by the drive means 8. On the first inlet port 14 there is arranged a first sensor device 24 as a hydraulic device and in the outlet port 18 there is arranged a second sensor device 26 as a hydraulic device. In this example the hydraulic devices are sensor devices 24 and 26, namely temperature sensors detecting the temperature of the fluid flow inside the inlet port 14 and the outlet port 18. In the mixing device the first inlet port may for example be connected to a return line of a heating circuit, whereas the outlet port 18 is connected to the supply line of the heating circuit. The second inlet port 16 may be connected to a supply line of the heating system delivering a flow of hot water from a heat source like a boiler.

The sensor devices 24, 26 are connected to the control device 10 via signal lines 28. The signal lines 28 are detachable from the control and drive unit 4 by plug connections 30. Instead of the wired connection the sensor device 24 and 26 may be connected to the control device 10 via a wireless signal transmission, for example using Bluetooth standard or similar.

The sensor devices 24 and 26 comprise electronics having a storage means 32 inside the sensor devices 24, 26. Also the control device 10 comprises storage means 32. The storage means 32 are provided to store information specifying the hydraulic unit 2. This information contains a system an identifier identifying the hydraulic system 2 and in particular the type of hydraulic unit 2. Alternatively or additionally this information may contain parameters defining characteristics and/or specifications of use of the hydraulic unit 2 which are required for the control device 10 to control the actuator inside the hydraulic unit 2 in a desired manner. The information stored in the storage means 32 is required to set up the control, in particular to select a control scheme used by the control device 10 when controlling the hydraulic unit 2 by controlling the drive means 8. For example the control scheme may be specific for a certain size of hydraulic units 2. It may be that the same control and drive unit 4 can be used in connection with different hydraulic units 2, for example of different dimension.

As can be derived from the forgoing description, in this example the hydraulic unit 2 itself is a mechanical unit only, since the drive means 8 and the control device 10 are arranged in a separate control and drive unit 4 which is detachably connected with the hydraulic unit 2. This means that the hydraulic unit 2 does not contain any own electronics which may be suitable to store the required information. The sensor devices 24 and 26 are auxiliary devices or subdevices inside the hydraulic unit 2 and these subdevices are used to store the required information referring to the entire hydraulic unit 2, i.e. which specify the overall hydraulic unit 2, and not the sensor devices 24, 26 only. Thus, according to the invention an electronic component inside a mechanical hydraulic unit is used to store further information going beyond the information referring to the sensor device, namely specifying the mechanical device into which the sensor device is integrated.

In this example there are two sensor devices 24 containing storage means 32. Preferably in all storage means 32 there are stored the same information specifying the hydraulic unit 2. The control device 10 is configured to carry out a verification routine, for example during start of the control device and in particular after being connected to the hydraulic unit 2. During this verification routine it is verified or checked whether all three storage means 32 contain the same information, i. e. corresponding system identifiers specifying the hydraulic unit 2. If the information stored in all three components is matching or identical, the verification routine for example allows the start of the control on basis of a set up or control scheme relating to the specification of the hydraulic unit 2 stored in the storage means 32. In case that the storage means 32 inside the control device 10 should contain information different to the information contained in the two sensor devices 24 and 26, the setting of the control device 10, i.e. the control scheme or program has to be changed. In this case the control scheme is set to a control scheme or program matching to the information stored in the majority of devices, i. e. in the two sensor devices. Accordingly, the information stored in the storage means 32 of the control device 10, being in the minority, preferably is replaced with identical information stored in the sensor devices 24 and 26 so that finally there is the identical information specifying the hydraulic unit 2 inside all three components. This replacement or change of set up may require a confirmation by a user. This method allows to connect an unspecified control and drive unit 4 with the hydraulic unit 2 ensuring that the control device 10 inside the control and drive unit 4 is configured or reconfigured to the required setting given by the information stored in the storage means 32 of the two sensor devices 24 and 26. This may simplify the installation of different hydraulic devices or systems for example in a large heating system, since it does not matter whether the control and drive units 4 for several hydraulic units 2 are changed or mixed up. Furthermore, a control and drive unit 4 can easily be replaced in case of a fault.

Furthermore, this design allows to easily replace one of the sensor devices 24 and 26. If one of the sensor devices 24 and 26 is replaced the control device 10 preferably starts a verification or set up routine again verifying whether the information stored in all three storage means 32 is the same. In this case likely the storage means 32 of the replaced sensor device does not contain matching information. Thus, the control device 10 detects that one sensor device and the storage means 32 of the control device 10 contain identical or matching information in majority and writes identical information into the storage means 32 of the new sensor device so that again all three elements contain the same information specifying the hydraulic unit 2. This may be done in similar manner with more than three components (sensors and control devices). Furthermore, also the sensor devices 24 and 26 may be configured on basis of the information stored in the storage means 32 or received from the control device 10. For example a measurement range may be set according to this information. Alternatively, it may be possible to use sensors which are able to detect different parameters like pressure and temperature and a configuration may define which values are output by the sensor in a specific system.

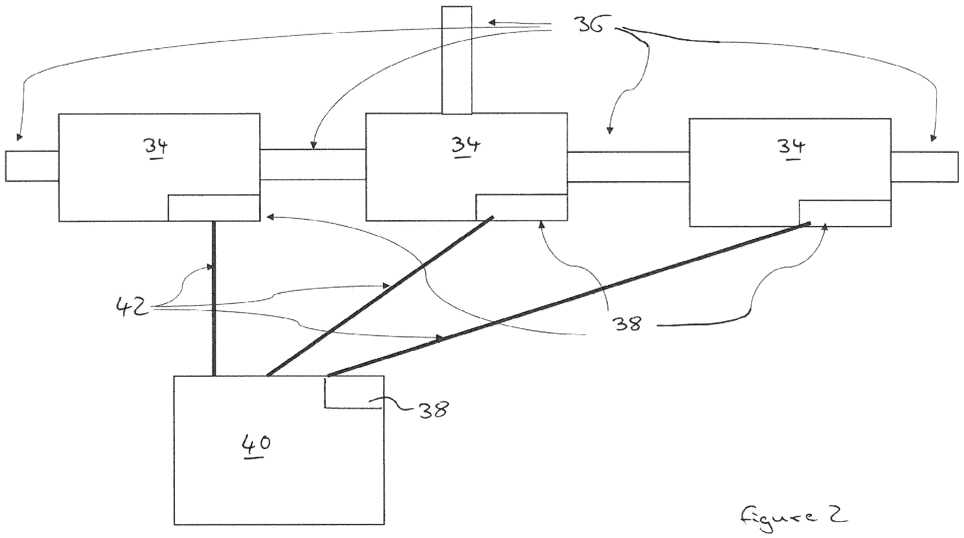

Figure 2 shows an embodiment according to the invention in a more general manner. Figure 2 shows three hydraulic devices 34, which for example may be pumps, valves, sensors etc. These hydraulic devices 34 may be connected by hydraulic connections 36 to form a hydraulic system. Each of the hydraulic devices 34 contains electronics or electronic devices including storage means 38. These storage means 38 are configured to store at least one system identifier characterizing the hydraulic system, in particular the entire hydraulic system. This characterization of the hydraulic system may include type, size, application, necessary configuration etc. of the hydraulic system. The hydraulic system further includes one control device 40 for controlling the entire hydraulic system. Also the control device 40 comprises storage means 38, at least storing a system identifier as explained above. The hydraulic devices 34 and the control device 40 are connected via a communication connection 42. The communication connection 42 may be established according to any suitable standard. When assembling or combining the components, the control device 40 carries out a verification or check up process reading the system identifiers from all the storage means 38 and comparing the system identifiers.

In case that the system identifiers read from all the storage means 38 are identical, the control device 40 sets up or configures a control, i. e. a control program or control scheme carried out by the control device 40, according to or on basis of this system identifier. In case that the system identifiers do not correspond or are not identical, the control device 40 sets up or configures the control, i. e. the control program or control scheme according to a majority of system identifiers which are identical. For example two of the hydraulic components 34 and the control device 40 may have the same system identifier stored in the storage means 38 and only one hydraulic device 34 shows a not corresponding system identifier. Then, the control device 40 sets up the control according to the system identifier found in three of the devices and disregards the different or not matching system identifier in the fourth device. In the next step the control device 40 overwrites the not corresponding system identifier in the fourth device so that all components have the same system identifier stored in the storage means 38. This for example may be the case when exchanging one of the components and replacing the component by an unconfigured component or a component configured in a different way. Furthermore, the control device 40 may adjust an internal control device of the hydraulic device 34 not having the corresponding system identifier to set up the control of the hydraulic device 34 corresponding to the control or design of the entire hydraulic system. It would also be possible to set up the control device 40 in case that the storage means 38 of the control device 40 shows a system identifier different from the system identifier stored in the three other hydraulic devices 34. This may for example be the case if the control device 40 is replaced or, for example taken from another hydraulic system. In this case the hydraulic device 40 would configure according to the system identifiers read in the storage means 38 of the hydraulic devices 34 and overwrite the own system identifier stored in the storage means 38 of the control device 40.

Furthermore, it would be possible to further design the control device 40 such that it requires an input by a user or operator to confirm the set up of the hydraulic system. In particular in case that not all system identifiers read are identical such a confirmation by the user may be necessary. For this respective input and display devices may be provided on the control device 40 and/or the control device 40 may communicate with a remote control, which may be a software application on a common smartphone. Furthermore, it would be possible that a part of the functionality of the control device 40 is provided by an external device, like such a remote control or smartphone. In particular the described verification step, i. e. to check whether the read system identifiers are identical or correspond may also be done in an external device like such a remote control.

### Reference numerals

- 2: hydraulic unit
- 4: control and drive unit
- 6: coupling
- 8: drive means
- 10: control device
- 12: housing
- 14: first inlet port
- 16: second inlet port
- 18: outlet port
- 20: actuator space
- 22: hydraulic actuator
- 24: first sensor device
- 26: second sensor device
- 28: signal lines
- 30: plug connection
- 32: storage means
- 34: hydraulic device
- 36: hydraulic connections
- 38: storage means
- 40: control device
- 42: communication connection

## Claims

1. Hydraulic system comprising at least two hydraulic devices (24, 26; 34) and at least one control device (10; 40), wherein each of the hydraulic devices (24, 26; 34) and the control device (10; 40) comprises storage means (32; 38), and the hydraulic devices (24, 26; 34) and the at least one control device (10; 40) are interconnected for data communication,
**characterized in that**
said storage means (32; 38) are configured to store at least one system identifier characterizing the hydraulic system and that said at least one control device (10; 40) is configured to read the system identifiers from the storage means (32; 38),
to check whether the read system identifiers show a corresponding characterization of the hydraulic system, and
to set up a control according to a majority of corresponding system identifiers.

2. Hydraulic system according to claim 1, **characterized in that** said system identifier characterizes hydraulic properties, type, dimension, assembly and/or application of the hydraulic system.

3. Hydraulic system according to claim 1 or 2, **characterized in that** the control device is configured to check whether the read system identifiers are identical and to set up a control according to a majority of identical system identifiers.

4. Hydraulic system according to one of the preceding claims, **characterized in that** the control device (10; 40) is configured to set up the control according to such corresponding or identical system identifiers stored in the storage means (32; 38) of more than the half of the devices.

5. Hydraulic system according to one of the preceding claims, **characterized in that** the hydraulic devices (24, 26; 34) are sensors and/or hydraulic actuators, for example pumps and/or valves.

6. Hydraulic system according to one of the preceding claims, **characterized in that** said at least one control device (10; 40) is a control device of one of the hydraulic devices (24, 26; 34) and preferably is integrated into one of the hydraulic devices (24, 26; 34).

7. Hydraulic system according to one of the preceding claims, **characterized in that** said at least one control device (10; 40) is a central control device configured for controlling the hydraulic system.

8. Hydraulic system according to one of the preceding claims, **characterized in that** said hydraulic devices (24, 26; 34) each comprise a data connection to a central control device (10; 40).

9. Hydraulic system according to one of the preceding claims, **characterized in that** at least two of the hydraulic devices (24, 26; 34) are directly interconnected for data communication.

10. Hydraulic system according to one of the preceding claims, **characterized in that** the at least one control device (10; 40) is configured to set up the control of the hydraulic system and/or the control of at least one of the hydraulic devices (24, 26; 34).

11. Hydraulic system according to one of the preceding claims, **characterized in that** the control device (10; 40) is configured to write a system identifier into the storage means (32; 38) of those devices not showing a system identifier corresponding to the majority of system identifiers.

12. Hydraulic system according to one of the preceding claims, **characterized in that** the interconnection for data communication is a wired and/or wireless data connection.

13. Method to set up a control of a hydraulic system comprising at least two hydraulic devices (24,26; 34) and at least one control device (10; 40), wherein each of the hydraulic devices (24, 26; 34) and the control device (10; 40) comprises storage means (32; 38) configured to store at least one system identifier characterizing the entire hydraulic system,
**characterized by** the following steps:
reading the system identifiers stored in the storage means (32; 38) of the hydraulic devices (24, 26; 34) and the at least one control device (10; 40),
checking whether the read system identifiers show a corresponding characterization of the hydraulic system, and
setting up a control according to a majority of corresponding system identifiers.

14. Method according to claim 13, **characterized in that** the system identifiers showing a corresponding characterization of the hydraulic system are identical.

15. Method according to claim 13 or 14, **characterized in that** the control set up according to the majority of corresponding system identifiers is a control of the hydraulic system and/or of at least one hydraulic device (24, 26; 34) in the hydraulic system.
